# EUROPÄISCHE PATENTANMELDUNG

(11) **EP 0 634 601 A1**
(43) Veröffentlichungstag der Anmeldung: **18.01.1995**
(21) Anmeldenummer: 94110376.4
(22) Anmeldetag: 04.07.1994
(51) Int. Cl.: F16L 37/248, F16B 7/20, A47L 9/24

(54) **Anordnung zum lösbaren Verbinden von zwei mit ihren einen Enden ineinandersteckbaren Rohrteilen**

(30) Priorität: 15.07.1993 DE 4323803
(71) Anmelder: SIEMENS AKTIENGESELLSCHAFT, D-80333 München (DE)
(72) Erfinder: Lins, Felix, D-97616 Niederlauer (DE); Prell, Manfred, D-97702 Münnerstadt (DE); Seith, Thomas, D-97616 Bad Neustadt (DE)

(57) **Zusammenfassung**

Die Erfindung betrifft eine Anordnung zum lösbaren Verbinden von zwei mit ihren einen Enden ineinandersteckbaren Rohrteilen, bei welcher Anordnung das übersteckbare Rohrteil (1) eine von der Endkante des betreffenden Endes (6) ausgehende L-förmige Ausnehmung (7) aufweist, deren in Achsrichtung des Rohrteiles (1) verlaufender L-Schenkel (8) als Einstecknut für einen an dem einsteckbaren Rohrteil (2) vorgesehenen, nach radial außen abstehenden Nocken (4) ausgebildet ist, der durch gegenseitiges Verdrehen der Rohrteile (1 und 2) in dem in Umfangsrichtung des Rohrteiles (1) verlaufenden L-Schenkel (9) einbringbar ist, bei welcher Anordnung ferner die Rohrteile (1 und 2) in der Endlage des Nockens (4) in dem betreffenden L-Schenkel (9) durch Verrastung gesichert sind. Die Sicherung der Rohrteile im zusammengesteckten Zustand kann ohne zusätzliche Bauteile dadurch erfolgen, daß an den ineinanderfügbaren Endbereichen der Rohrteile jeweils mindestens ein zur gegenseitigen Verrastung die radiale Dehnfähigkeit der Rohrteile nutzendes Rast- und Gegenrastelement vorgesehen ist.

## Beschreibung

Die Erfindung betrifft eine Anordnung gemäß dem Oberbegriff des Anspruchs 1.

Eine solche Anordnung ist durch das DE-U-84 13 275 bekannt. Um die Rohrteile im zusammengesteckten Zustand gegen unbeabsichtigtes Lösen zu sichern, wird bei dieser Anordnung ein an dem Ende des einsteckbaren Rohrteiles vorgesehener Stift in seiner Endlage in der L-förmigen Ausnehmung verrastet. Hierzu ist an dem übersteckbaren Rohrteil ein gesonderter Kunststoffring angebracht, an dem durch einen in Umfangsrichtung verlaufenden Schlitz ein federnder Steg ausgebildet ist, der mit einem mit dem Stift verrastenden Nippel versehen ist. Bei dieser Anordnung verläuft die bei der Verrastung des Stiftes mit dem Nippel notwendige Auslenkung des Steges parallel zur Achsrichtung der Rohrteile. Eine solche Auslenkrichtung läßt sich nur mit dem zusätzlichen Kunststoffring verwirklichen.

Der Erfindung liegt die Aufgabe zugrunde, eine Anordnung der eingangs beschriebenen Art so weiterzubilden, daß für die Sicherung der Rohrteile im zusammengesteckten Zustand keine zusätzlichen Bauteile erforderlich sind.

Die Lösung der gestellten Aufgabe gelingt nach der Erfindung dadurch, daß an den ineinanderfügbaren Endbereichen der Rohrteile jeweils mindestens ein zur gegenseitigen Verrastung die radiale Dehnfähigkeit der Rohrteile nutzendes Rast- und Gegenrastelement vorgesehen ist. Hierdurch läßt sich eine entsprechende Sicherung der Rohrteile im zusammengesteckten Zustand allein durch unmittelbar an diesen Rohrteilen ausgebildete Rastelemente erreichen.

Der Anspruch 2 beschreibt eine konstruktiv einfach ausfuhrbare Verrastung der Rohrteile.

Die Rastnut kann vorteilhafterweise an einem der Wulste ausgebildet sein. Damit braucht keine gesonderte, lediglich die Rastnut bildende Materialerhebung vorgesehen zu werden.

Anhand eines in der Zeichnung dargestellten Ausführungsbeispieles wird die Erfindung nachfolgend näher beschrieben. Es zeigt:
- FIG 1: die ineinanderfügbaren Enden zweier Rohrteile in Seitenansicht,
- FIG 2: einen Schnitt der Rohrteile im zusammengesteckten Zustand.

Mit 1 ist ein übersteckbares und mit 2 ein einsteckbares Rohrteil bezeichnet. Bei den Rohrteilen kann es sich beispielsweise um den Anschlußstutzen (übersteckbares Rohrteil 1) eines Staubsaugermundstückes und ein an diesen Stutzen ansteckbares Saugrohr (einsteckbares Rohrteil 2) handeln.

An dem in das übersteckbare Rohrteil 1 einführbaren Ende 3 des einsteckbaren Rohrteiles 2 ist ein nach radial außen weisender Nocken 4 und ferner ein ebenfalls nach radial außen weisendes, rippenförmiges Rastelement 5 ausgebildet. Das Rastelement 5 weist gegenüber dem Nocken 4 eine geringere radiale Höhe auf.

Das aufnehmende Ende 6 des übersteckbaren Rohrteiles 1 ist mit einer L-förmigen Ausnehmung 7 versehen, in deren in Achsrichtung des Rohrteiles 1 verlaufenden L-Schenkel 8 der Nocken 4 beim Zusammenfügen der Rohrteile 1 und 2 eingeführt wird. Durch anschließendes Verdrehen der Rohrteile 1 und 2 gegeneinander gelangt der Nocken 4 in den in Umfangsrichtung verlaufenden L-Schenkel 9 der L-förmigen Ausnehmung 7. Damit sind die beiden Rohrteile 1 und 2 in axialer Richtung fest miteinander gekoppelt.

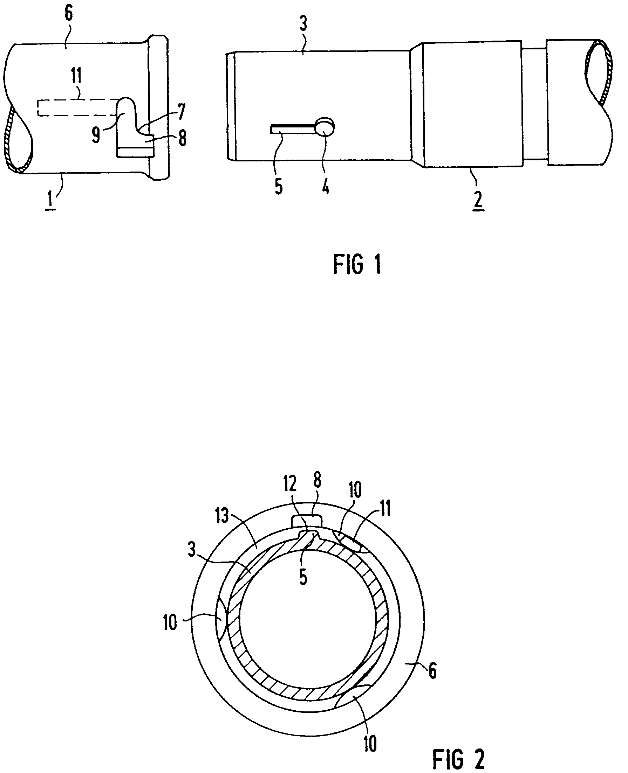

Wie aus der Querschnittsdarstellung in FIG 2 zu ersehen ist, sind am Innenumfang des aufnehmenden Endes 6 gleichmäßig über dessen Innenumfang verteilt drei Wulste 10 vorgesehen. In einem dieser Wulste 10 ist eine Rastnut 11 eingeformt. Die Rastnut und das rippenförmige Rastelement 5 sind in Größe und Form einander angepaßt.

Die radiale Höhe des Rastelementes 5 ist so bemessen, daß das einfuhrbare Ende 3 des einsteckbaren Rohrteiles 2 in dem aufnehmenden Ende 6 des übersteckbaren Rohrteiles 1 gedreht werden kann, d.h. der radiale Abstand der Oberseite 12 des rippenförmigen Rastelementes 5 zur Mittelachse der Rohrteile 1 und 2 entspricht höchstens gleich dem halben Durchmesser der Aufnahmeöffnung 13 des aufnehmenden Endes 6. Außerdem sind das rippenförmige Rastelement 5 und die Rastnut 11 in ihrer Lage an dem betreffenden Rohrende 3 bzw.6 so angeordnet, daß beim Verdrehen der Rohrteile 1 und 2 das rippenförmige Rastelement 5 in der Rastnut 11 verrastet. Durch diese Verrastung werden die Rohrteile 1 und 2 gegen ein unbeabsichtigtes Lösen gesichert.

Beim Trennen der Rohrteile 1 und 2 muß zunächst die Verrastung zwischen dem Rastelement 5 und der Rastnut 11 durch ein mit entsprechendem Kraftaufwand erfolgendes Verdrehen der Rohrteile 1 und 2 gelöst werden. Die Rohrteile 1 und 2 werden dann weiterhin so weit gegeneinander verdreht, daß der Nocken 4 in den Bereich des in Achsrichtung verlaufenden L-Schenkels 8 gelangt. Danach können die Rohrteile 1 und 2 axial auseinander gezogen und somit voneinander gelöst werden.

## Patentansprüche

1. Anordnung zum lösbaren Verbinden von zwei mit ihren einen Enden ineinandersteckbaren Rohrteilen, bei welcher Anordnung das übersteckbare Rohrteil (1) eine von der Endkante des betreffenden Endes (6) ausgehende L-förmige Ausnehmung (7) aufweist, deren in Achsrichtung des Rohrteiles (1) verlaufender L-Schenkel (8) als Einstecknut für einen an dem einsteckbaren Rohrteil (2) vorgesehenen, nach radial außen abstehenden Nocken (4) ausgebildet ist, der durch gegenseitiges Verdrehen der Rohrteile in den in Umfangsrichtung des Rohrteiles (1) verlaufenden L-Schenkel (9) einbringbar ist, bei welcher Anordnung ferner die Rohrteile (1 und 2) in der Endlage des Nockens (4) in dem betreffenden L-Schenkel (9) durch Verrastung gesichert sind,
**dadurch gekennzeichnet**,
daß an den ineinanderfügbaren Endbereichen der Rohrteile (1 und 2) jeweils mindestens ein zur gegenseitigen Verrastung die radiale Dehnfähigkeit der Rohrteile (1 und 2) nutzendes Rast- und Gegenrastelement (5 und 11) vorgesehen ist.

2. Anordnung nach Anspruch 1,
**dadurch gekennzeichnet**,
daß mindestens an einem der ineinandersteckbaren Enden (3 bzw.6) der Rohrteile (1 und 2) mindestens drei gleichmäßig über den Umfang verteilte, sich axial erstreckende Wulste (10) ausgebildet sind, an denen das jeweils andere Ende (3 bzw.6) im zusammengesteckten Zustand der Rohrteile (1 und 2) anliegt, daß ferner an dem einsteckbaren Rohrteil (2) mindestens ein nach radial außen ragendes Rastelement (5) und an dem übersteckbaren Rohrteil mindestens eine Rastnut (11) als Gegenrastelement ausgebildet ist.

3. Anordnung nach Anspruch 2,
**dadurch gekennzeichnet**,
daß die Rastnut (11) an einem der Wulste (10) ausgebildet ist.
